# EUROPEAN PATENT SPECIFICATION

(11) **EP 2 916 487 B1**
(45) Date of publication and mention of the grant of the patent: **10.01.2018**
(21) Application number: 13850466.7
(22) Date of filing: 22.08.2013
(51) Int. Cl.: H04L 29/08, H04L 12/24, G06F 9/445, G06F 9/44

(54) **METHOD AND SYSTEM FOR UPGRADING PATCHING SOFTWARE**
VERFAHREN UND SYSTEM ZUR AKTUALISIERUNG VON PATCHING-SOFTWARE
PROCÉDÉ ET SYSTÈME DE MISE À NIVEAU DE LOGICIEL DE CORRECTION DE PROGRAMME

(30) Priority: 31.10.2012 CN 201210426136
(43) Date of publication of application: 09.09.2015
(73) Proprietor: ZTE Corporation, Shenzhen, Guangdong 518057 (CN)
(72) Inventor: ZHAO, Zhenfu, Shenzhen Guangdong 518057 (CN)
(74) Representative: Chimini, Francesco
(86) International application number: PCT/CN2013/082103
(87) International publication number: WO 2014/067324

(56) References cited:
- CN-A- 101 102 219
- CN-A- 101 533 356
- CN-A- 102 937 906
- US-A1- 2007 174 685
- US-B1- 8 190 720
- US-B2- 7 490 161
- ZHANG, MINDI ET AL.: 'Design of ISSU System for Devices in Distributed Network' COMPUTER SYSTEMS & APPLICATIONS vol. 19, no. 6, June 2010, pages 40 - 43, XP008179208

## Description

### Technical Field

The present invention relates to the technical field of communications, and especially to a method and system for upgrading software.

### Background

With the expanding of the requirement of people for access a network to acquire information anytime and anywhere, various wired or wireless terminals are emerging and accessed to networks. In order to improve user experience, the network devices for bearing user network services in a network are becoming more and more important; if an exception occurs to the network device, it will influence the user access experience thus losing user, and influence the operation of the electronic commerce of an enterprise thus bringing about great economic losses.

During the operation of a network device, since a software fault may exist or a new functional feature may be newly added, we have to be faced with various network device software upgrade. In order to avoid service interruption caused by the network device during software upgrade, it is required to consider how to reduce the influence of service interruption, improve the reliability and availability of the service and improve the user experience during software upgrade.

When the online service software is upgraded, there are two problems to be solved. One is the upgrade of software; and the other is the restore of the service. At present, the main solution for upgrading the online service software in a communication device in the related art is that the upgrade is based on a master and slave mode. The software upgrade method based on the primary and slave mode is a software upgrade based on the case with the support of the master and slave hardware, wherein the unit of upgrade is the entire software version, and the switch from the master to the slave is performed on the software during the upgrade. In the case of no support of the master and slave physical hardware, the software upgrade method is non-feasible. Moreover, even with the support of the master and slave physical hardware, if the influence of the upgrade is little, the upgrade duration of the upgrade method is long and the cost thereof is large.

US 8190720B1 provides a related technical solution; however, the above mentioned problem still remains unsolved.

### Summary

The technical problem to be solved in the embodiments of the present invention are: for a communication device in which software on a forwarding plane is separated from software on a control plane and management plane, providing a method and system for upgrading patching software, and performing process-level upgrade on the software on the control plane and management plane in the communication device, so as to avoid necessary service interruption caused by software upgrade and to improve the service experience of the user. Embodiments of the invention according to claims 1 and 4 provide a method and a system. Further embodiments are defined by the dependent claims. Embodiments of the present invention and the examples at least have the following advantages:
The method and system described in the embodiments of the present invention allows for process-level upgrade of software on the control plane and management plane in the communication device in which software on a forwarding plane software is separated from software on a control plane and management plane, thus preventing unnecessary service interruptions due to software upgrade, increasing service reliability and availability, preventing major economic losses due to service interruption, and enhancing user service experience. For a communication device which supports multiple processes, when an interface between specific processes is changed, the processes, the interface of which has been changed, is upgraded as a unit of software upgrade; in this way, the change of the interface is taken as the internal change of a process set to be upgraded, and the procedure of upgrade for the process set to be upgraded is similar to the procedure of upgrade caused inside a single process, which simplifies the software upgrade procedure of the process set.

### Brief Description of the Drawings

Fig 1 shows a flow chart of a method in a first embodiment of the present invention;
Fig 2 shows a flow chart of a method for upgrading patching software in an example;
Fig 3 shows a schematic structural diagram of a system for upgrading patching software in examples;
Fig. 4 shows an interaction sequence diagram for upgrading software in a process set in an example;
Fig. 5 is a schematic diagram showing states before software on a control plane and management plane in an access gateway is upgraded in an example;
Fig. 6 is a schematic diagram showing an old version process set in the access gateway is ended in an example;
Fig. 7 is a schematic diagram showing a new version process set in the access gateway is started in an example;
Fig. 8 is a schematic diagram showing data is input into a new version process set by an upstream process in the access gateway in an example; and
Fig. 9 is a schematic diagram showing a new version process set in the access gateway enters a normal operation state in an example.

### Detailed Description of the Embodiments

In order to further elaborate the technical means and effect employed in the present invention to arrive at a pre-determined purpose, now combined with the accompany drawings and prefered embodiments, the present invention is described in detail as follows.

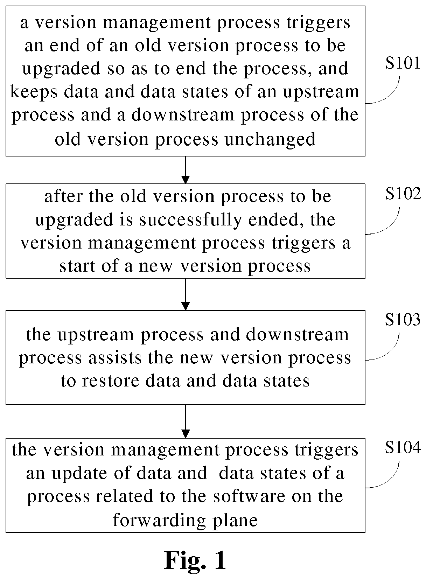

As shown in Fig. 1, provided in a first embodiment of the present invention is a method for upgrading a patching software, and the method is applied for a communication device in which software in a forwarding plane is separated from software on a control plane and management plane, and under a condition that a process upgrade of the control plane and management plane software is caused by a change within a single process, the method comprises the following steps.

Step S101, a version management process triggers an end of an old version process to be upgraded so as to end the process, and keeps data and data states of an upstream process and a downstream process of the old version process unchanged.

Particularly, it is possible to send an instruction to the upstream process and the downstream process of the old version process via the system management process to inform the upstream process and the downstream process of the old version process to remain the data and data states unchanged, and it is also possible to perform no operation on the upstream process and the downstream process, so that the upstream process and the downstream process themselves remain the data and the data states unchanged.

Alternatively, when any software on the control plane and management plane in the communication device has a process running in a primary state and a process running in a standby state at the same time, the version management process triggers the end of the old version process to be upgraded in step S101 particularly comprises:
the version management process simultaneously triggers an end of an old version process to be upgraded in a primary state and an end of an old version process to be upgraded in a standby state.

Step S102, after the old version process to be upgraded is successfully ended, the version management process triggers a start of a new version process. The new version process corresponding to the old version process to be upgraded may be packaged into a software patch package before the upgrade, and during the upgrade, the version management process replaces the old version process to be upgraded with the new version process in the designated software patch package and start the new version process.

Step S103, the upstream process and downstream process assists the new version process to restore data and data states.

Particularly, step S103 comprises the following procedure.

A1: the new version process re-establishes a link with the upstream process and the downstream process respectively, and sends a data and data state restoring request to the upstream process and the downstream process.

A2: when receiving the data and data state restoring request, the upstream process and the downstream process output data, which is previously output to the old version process, to the new version process via the upstream process, alternatively, the downstream process outputs data, which is previously output to the downstream process itself by the old version process, to the new version process, so that the data and the data states of the new version process may be restored.

Optionally, the method for upgrading the patching software in the embodiment further comprises:
step S104, the version management process triggers an update of data and data states of a process related to the software on the forwarding plane. Since the process of the control plane in the communication device is upgraded previously, in order to further reduce the influence on the forwarding service, it is required to upgrade the data and data states of the process related to the software on the forwarding plane, i.e. refreshing a routing table of the forwarding plane, after the data and data state of the new version process is restored.

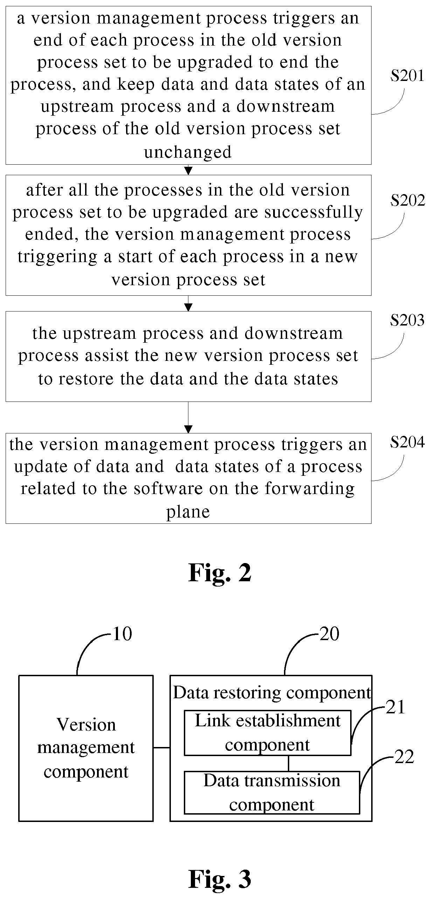

In an example, as shown in Fig. 2, provided is a method for upgrading patching software, which is applied for a communication device on which software on a forwarding plane is separated from software on a control plane and management plane, and under a condition that a process set upgrade of the software on the control plane and management plane is caused by an interface change between two processes in a process set, the method comprises the following steps.

Step S201, a version management process triggers an end of each process in the old version process set to be upgraded to end the process, and keep data and data states of an upstream process and a downstream process of the old version process set unchanged.

Particularly, it is possible to send an instruction to the upstream process and the downstream process of the old version process set via the system management process to inform the upstream process and the downstream process of the old version process set to remain the data and data states unchanged. Alternatively, it is also possible to perform no operation on the upstream process and the downstream process, so that the upstream process and the downstream process themselves remain the data and the data states unchanged.

Optionally, when the software on the control plane and management plane in the communication device has a process running in a primary state and a process running in a standby state at the same time, the version management process triggering the end of each process in the old version process set to be upgraded in step S201 particularly comprises:
when ending each process, the end of the old version process to be upgraded in the primary state and the end of the old version process to be upgraded in the standby state are triggered.

Step S202, after all the processes in the old version process set to be upgraded are successfully ended, the version management process triggering a start of each process in a new version process set. The new version process set corresponding to the old version process set to be upgraded may be packaged into a software patch package before the upgrade, and during the upgrade, the version management process replaces the old version process set to be upgraded with the new version process set in the designated software patch package and start the processes in the new version process set.

Step S203, the upstream process and downstream process assist the new version process set to restore the data and the data states.

Particularly, step S203 comprises the following procedure.
B1: the new version process set re-establishes a link with the upstream process and the downstream process respectively, and sends a data and data state restoring request to the upstream process and the downstream process.
B2: when receiving the data and data state restoring request, the upstream process and the downstream process output data, which is previously output to the old version process set, to the new version process set via the upstream process, alternatively, the downstream process outputs data, which is previously output to the downstream process set itself by the old version process set, to the new version process, so that the data and the data states of the new version process set may be restored.

Optionally, the method for upgrading the patching software in the example may further comprise the following steps.

Step S204, the version management process triggers an update of data and data states of a process related to the software on the forwarding plane. Since the process set of the control plane in the communication device is upgraded previously, in order to further reduce the influence on the forwarding service, it is required to upgrade the data and data states of the process related to the software on the forwarding plane, i.e. refreshing a routing table of the forwarding plane, after the data and data states of the new version process set is restored.

In an example, as shown in Fig. 3, a system for upgrading patching software is provided. The system is provided in a communication device on which software on a forwarding plane is separated from software on the control plane and management plane, and under a condition that a process upgrade of the software on the control plane and management plane is caused by a change within a single process, the system comprises the following components.
1) A version management component 10 configured to trigger an end of an old version process to be upgraded to exit the process, and keep data and data states of an upstream process and a downstream process of the old version process unchanged; and after the old version process to be upgraded is successfully ended, trigger a start of a new version process.

Optionally, when any software of the control plane and management plane in the communication device has a process running in a primary and a process running in a standby state at the same time, the version management component 10 is configured to simultaneously trigger an end of the old version process to be upgraded in a primary state and an end of the old version process to be upgraded in a standby state.

Optionally, the version management component 10 is further configured, after upgrading the related process of the software on the control plane and management plane, trigger an update of the date and the data states of the related process of the software on the forwarding plane. Since the control plane and management software in the communication device is upgraded previously, in order to further reduce the influence on the forwarding service, it is required to upgrade the data and data states of the related process of the software on the forwarding plane, i.e. refreshing the routing table of the forwarding plane, after restoring the data and data state of the new version process.
2) a data restoring component 20 located inside each process, wherein the upstream process and the downstream process, based on the data restoring component, assist the new version process to restore the data and the data states.

Particularly, the data restoring component 20 comprises:
a link establishment component 21, wherein the upstream process and the downstream process respectively re-establishes a link with the new version process via the link establishment component; and
a data transmission component 22, wherein the upstream process outputs data, which is previously output to the old version process, to the new version process via the data transmission component, alternatively, the downstream process outputs data, which is previously output to the downstream process itself by the old version process, to the new version process via the data transmission component, so that the data and the data states of the new version process may be restored.

In an example, as shown in Fig. 3, a system for upgrading a patching software is provided in an example, which is applied for a communication device in which software on a forwarding plane is separated from software on a control plane, and under a condition that a process set upgrade of the software on the control plane and management plane is caused by an interface change between two processes in a process set, the system comprises:
1) a version management component 10 configured to trigger an end of each process in the old version process set to be upgraded to end the process, and keep data and data states of an upstream process and a downstream process of the old version process set unchanged; and after all the processes in the old version process set to be upgraded are successfully ended, trigger a start of each process in a new version process set.

Optionally, when any software on the control plane and management plane in the communication device has a process running in a primary state and a process running in a standby state at the same time, the version management component 10 is particularly configured to: when ending each process, simultaneously trigger an end of the old version process to be upgraded in the primary state and an end of the old version process to be upgraded in the standby state.

Optionally, the version management component 10 is further configured to, after upgrading a related process set of the software on the control plane and management plane, trigger an update of the data and the data states of a related process of the software on the forwarding plane. Since the software on the control plane and management software in the communication device is upgraded previously, in order to further reduce the influence on the forwarding service, it is required to upgrade the data and data states of the related process of the software on the forwarding plane, i.e. refreshing the routing table of the forwarding plane, after restoring the data and data states of the new version process.
2) a data restoring component 20 located inside each process, wherein the upstream process and the downstream process, based on the data restoring component, assist the new version process set to restore the data and the data states.

Particularly, the data restoring component 20 comprises:
a link establishment component 21, wherein the upstream process and the downstream process respectively re-establishes a link with the new version process set via the link establishment component; and
a data transmission component 22, wherein the upstream process outputs data, which is previously output to the old version process set, to the new version process set via the data transmission component, alternatively, the downstream process outputs data, which is previously output to the downstream process set itself by the old version process set, to the new version process set via the data transmission component, so that the data and the data states of the new version process set may be restored.

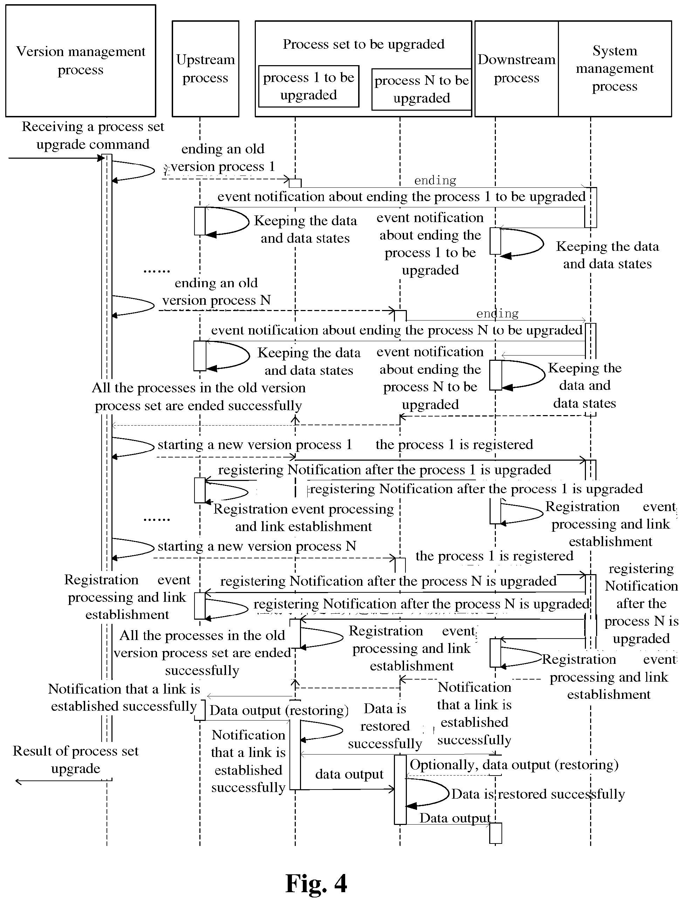

In an example, as shown in Fig. 4, a execution procedure for upgrading software on a control plane and management plane which is caused by an interface change between two processes in a process set is introduced in detail. There are five components in the example which are: a version management process, an upstream process, a process set to be upgraded, a downstream process, and a system management process. The version management process is responsible for managing the version upgrade and failure rollback of the processes, etc. the upstream process, the process set to be upgraded, and the downstream process are processes for realizing particular service functions, such as Forwarding Information Base (FIB) entry management, Routing Information Protocol (RIP), Border Gateway Protocol (BGP), etc. The upstream process and the downstream process both have data interaction with the process set to be upgraded, wherein the upstream process outputs data to the process set to be upgraded, and the process set to be upgraded outputs data to the downstream process; the system management process is responsible for the global state management of all the service processes, the system management process is reported when each process is ended or started, and the system management process maintains the state information about each process. When a certain process is started or ended, other application processes is notified to perform processing.

Fig. 4 is an interaction sequence diagram for updating software in a process set, and the software upgrade procedure comprises the following steps.
S1: the version management process receives a process set upgrade command, performs software upgrade on the process set, wherein an interface between two processes in the process set is to be changed , and takes an executable file, which is for changing the interface, of the process set as a patch software for upgrading at the same time.
S2: the version management process initiates an ending process instruction to each process in the old version process set to be upgraded, trigger the process in the old version process set to end the process.

Optionally, if any software on the control plane and the management plane in the communication device has a process running in a primary state and a process running in a standby state at the same time, it is required to end the process to be upgraded in the primary state and to end the process to be up upgraded in the standby state at the same time.
S3: the system management process is notified when the process in the old version process set to be upgraded.
S4: the system management process sends a notification to the upstream process and downstream process to notify the upstream and downstream process to keep the data and data states unchanged, thereby avoiding service interruption.
S5: the version management process sends an instruction to start the new version process set, so as to start the new version process set.

Optionally, if the software to be upgraded is in a process set, wherein the interface between processes in the process set is changed, then the version management process may start the new version process set when it is confirmed that all the processes in the process set to be upgraded are ended successfully. In the ending procedure, if time for ending a specific process is expired or the specific process is ended unsuccessfully, the version management process feeds back that the upgrade fails.

Optionally, if any software to be upgraded on the control plane and the management plane in the communication device has a process running in a primary state and a process running in a standby state at the same time, then the version management process may start the new version process after the process in the primary state or the process in the standby state are both ended successfully
S6: when the new version process set starts, the new version process set is registered in the system management process.
S7: the system management process sends a registration notification to the upstream and downstream process, so as to notify the upstream and downstream process to re-establish a link with the upgraded new version process set respectively.
S8: after the upstream process has established the link successfully, data, which is previously output to the old version process set, is output to the upgraded process, so as to assist the upgraded process set to restore the data and data states.

Optionally, the downstream process may output data, which is previously output to the downstream process itself by the old version process set, to the upgraded process according to the requirements, so as to assist the upgraded process set to restore the data and data states.
S9: when the upgraded new version process set has restored the data and data states of itself successfully, it enters a normal operation state and outputs the restored data to the downstream process.
   optionally, for the device in which the control plane is separated from the forwarding plane, if the upgraded process is a process on the control plane, and data to be restored may affect the function of the forwarding plane, it is required to update the entry of the forwarding plane after the date restoring is completed, so as to reduce the influence on the forwarding service.
S10: the version management process may determine that the upgrade is successfully after it is confirmed that all the processes in the new version process set are started and restored successfully. In the start procedure, if time for starting a specific process expires or the specific is started unsuccessfully, the version management process feeds back that the upgrade fails.

Based on the embodiments and examples above, the example for upgrading software on a control plane and management plane in the access gateway is explained below, wherein the upgrading is caused by an interface change between processes in a process set.

The application scenario is that software on the control plane and management plane in the access gateway is upgraded.

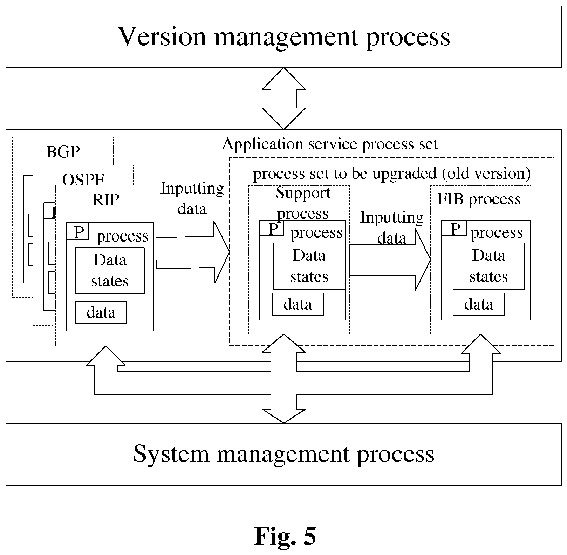

Fig. 5 to Fig. 9 show a scenario for upgrading software on a control plane and management plane in an access gateway, wherein Fig. 5 shows the states before the software is upgraded, and a support process and an FIB process in the access gateway needs to be upgraded; the following associated processes in the application service process set are related: a version management process, a system management process, a BGP process, a RIP process, an OSPF process, the support process, and the FIB process. The support process and the FIB process are a process set to be upgraded. The support process receives the route learned by each route protocol, and calculate an optimal route to generate an optimal FIB and outputs same to the FIB process; the BGP process, RIP process and OSPF process are upstream processes of the process set to be upgraded (the support process and the FIB process), which realize related route protocol negotiation and output the negotiated route to the support process, wherein the support process selects the optimal route and outputs same to the FIB process; the FIB process, which is a downstream process of the support process, maintains and manages the FIB entry output to itself by the support process.

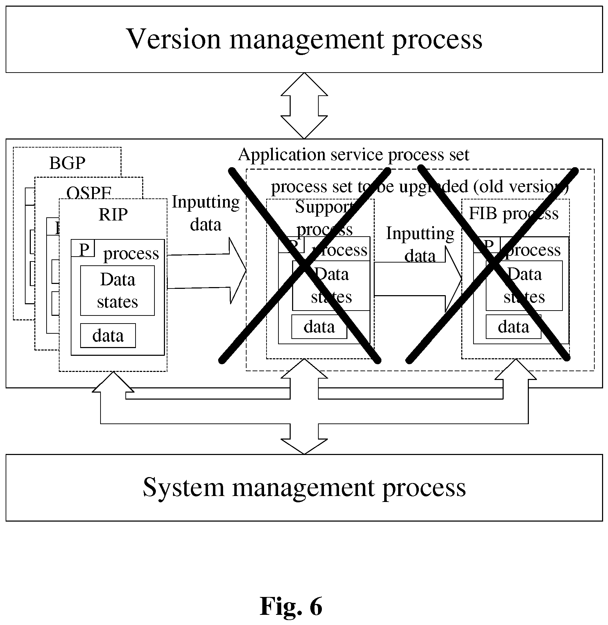

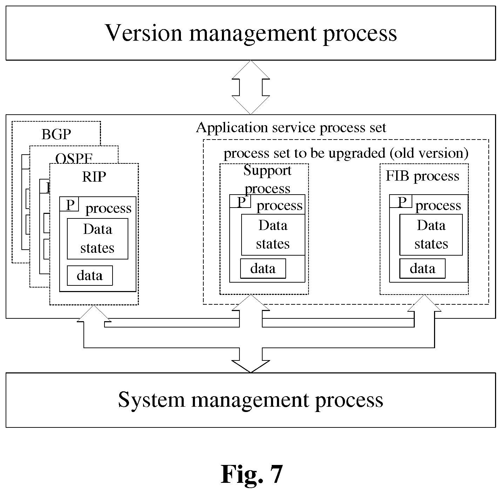

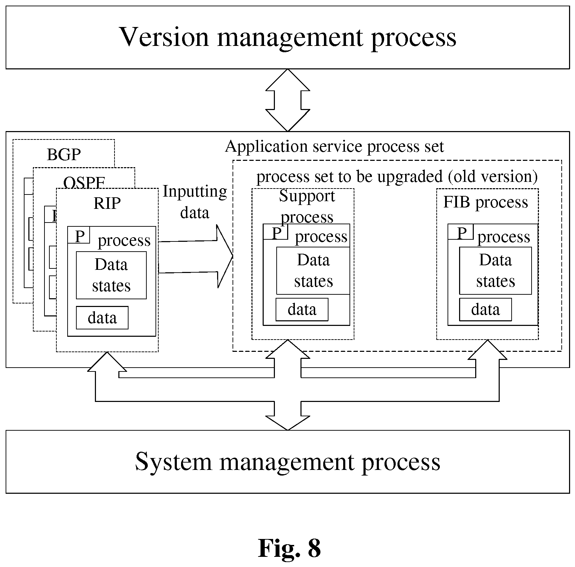

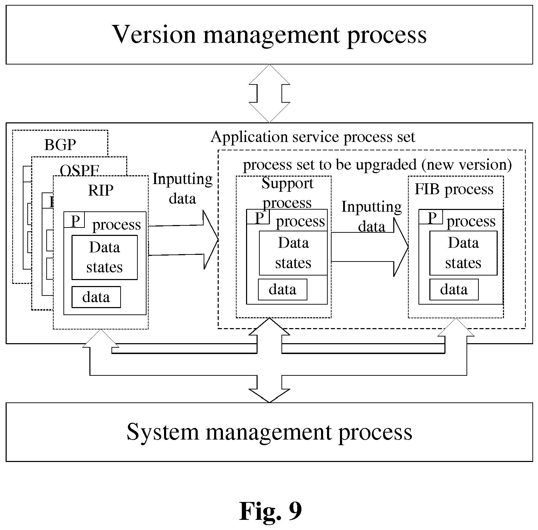

A method for upgrading patching software in a multi-process operating system on a network comprises the following steps.
C1: a version management process receives a process set upgrade command, and simultaneously upgrades executable files of the support process and the FIB process, wherein the executable files are taking as the patching software and the support process and the FIB process need to be upgraded simultaneously and are in a process set, wherein there is an interface change between two processes of the process set.
C2: as shown in Fig. 6, the version management process initiates an ending process instruction to the support process and the FIB process in the old version process set to be upgraded to trigger an end of the support process with the old version and the FIB process with the old version.
C3: the system management process senses that the support process with the old version and the FIB process with the old version which are to be upgraded, notifies the upstream processes. i.e. the BGP process, the RIP process and the OSPF process to keep the data and data states of the upstream processes unchanged, thereby avoiding service interruption.
C4 : as shown in Fig. 7, after the support process and the FIB process in the process set to be upgraded are both ended successfully, the version management process sends a start instruction to start the support process and the FIB process in the new version process set. The support process and FIB process are registered in the system management process after the support process and the FIB process are started.
C5: After sensing that the support process with a new version and the FIB process with a new version are started, the system management process notifies the upstream process, i.e. the BGP process, the RIP process and the OSPF process to respectively re-establish a link with the upgraded support process and the upgraded FIB process.
C6: as shown in Fig. 8, after the upstream process has established a link with the support process with the new version successfully, data, which is previously output to the old version process set, is output to the upgraded support process with the new version, so as to assist the upgraded support process to restore the data and data states. As shown in Fig. 9, when the upgraded support process with the new version has restored the data and data states successfully, it enters a normal operation state and outputs the restored data to the FIB process.
C7: the version management process determines that the upgrade is successfully after it is confirmed that the support process and the FIB process in a process set with a new version are started and restored successfully.

Usually, for an already issued software version, the patching software is mainly used for amending a local fault or newly added local minor feature in the version. The embodiments of the present invention discloses an online upgrade solution for a lightweight patching software service, the change of this patching software may be substantially classified into two types, one of which is an internal change of a specific process; and the other is a change of an interface change between specific processes. For the first type of change, if the change is merely the internal change of a specific process, then the process related to the change may be upgraded alone during the software upgrade, which will greatly reduce the influence of the software upgrade to the running service; and for the upgrade to the second type of interface change between specific processes, the processes of which the interfaces have been changed may be upgraded as a software upgrade unit. In this way, the interface change is taken as the internal change of the process set to be upgraded. The external process which is not in the process set to be upgraded does not sense the interface change, so as to simplify the procedure of software upgrade for the process set.

With respect to the service restoring after the upgrade of the patching software, it is mainly considered to be accomplished based on the upstream and downstream process of the software to be upgraded. The reason is that, in the communication device which supports a multi-process operating system, none process is isolated, each process may receive an input from the upstream process during operation, and then processes same to generate data and data states of itself, and output same to the downstream process. It can be seen therefrom that the data and data states of each process are generated according to the input data from the upstream process. Therefore, if a specific process requires upgrade, data may be input to the upgraded process again via the upstream process, so as to trigger the upgraded process to create and generate the data and data states of itself again.

The method and system for upgrading the patching software described in the embodiments of the present invention may be applied for a communication device in which software on a forwarding plane is separated from software on a control plane and manage plane and may allows for upgrading software on the control plane and management plane at a process-level, thus preventing unnecessary service interruptions due to software upgrade, increasing service reliability and availability, preventing major economic losses due to service interruption, and enhancing user service experience.

By means of the description of particular embodiments, there should be deeper and particular understanding of the technical means and effects employed to achieve the purpose in the present invention; however, the accompanying drawings are merely for the use of providing a reference and description, and are not used to limit the description.

### Industrial Applicability

As stated above, a method and system for upgrading patching software provided in the embodiments of the present invention and the examples have the following beneficial effects: allowing for upgrading software on the control plane and management plane in the communication device in which software on a forwarding plane is separated from software on a control plane and management plane, thus preventing unnecessary service interruptions due to software upgrade, increasing service reliability and availability, preventing major economic losses due to service interruption, and enhancing user service experience. For a communication device which supports multiple processes, when an interface between specific processes is changed, the processes, the interface of which has been changed, is upgraded as a unit of software upgrade; in this way, the change of the interface is taken as the internal change of a process set to be upgraded, and the procedure of upgrade for the process set to be upgraded is similar to the procedure of upgrade caused inside a single process, which simplifies the software upgrade procedure of the process set.

## Claims

1. A method for restoring the data and the data state of a new version process, wherein the method is performed by a communication device in which software on a forwarding plane is separated from software on a control plane and management plane, and under a condition that a process upgrade of the software on the control plane and management plane is caused by a change within a single process, the method comprises:
step 1, a version management process triggering at least one old version process to be upgraded to end, and keeping data and data states of an upstream process and a downstream process of the at least one old version process unchanged (S101);
step 2, after the at least one old version process to be upgraded successfully ends, the version management process triggering a start of the new version process (S102); and
step 3, the upstream process and the downstream process assisting the new version process to restore data and data states (S103);
wherein the step 3 particularly comprises: the new version process respectively establishing a link with the upstream process and the downstream process; outputting data, which was previously output to the old version process, to the new version process via the upstream process, or, the downstream process outputting data, which was previously output to the downstream process itself by the old version process, to the new version process, so as to restore the data and the data state of the new version process.

2. The method according to claim 1, wherein when any software on the control plane and management plane in the communication device has a process running in a primary state and a process running in a standby state at the same time, the version management process triggering the at least one old version process to be upgraded to end comprises:
the version management process simultaneously triggering an old version process to be upgraded in a primary state and an old version process to be upgraded in a standby state to end.

3. The method according to any one of claims 1 or 2, wherein the method further comprises:
step 4, the version management process triggering an update of data and data state of a related process of the software on the forwarding plane (S104).

4. A system for restoring data and data state of a new version process, wherein the system is provided in a communication device in which software on a forwarding plane is separated from software on a control plane and management plane, and under a condition that a process upgrade of the software on the control plane and management plane is caused by a change within a single process, the system comprises:
a version management component (10) configured to trigger at least one old version process to be upgraded to end, and keep data and data states of an upstream process and a downstream process of the at least one old version process unchanged; and after the at least one old version process to be upgraded successfully ends, trigger a start of the new version process; and
a data restoring component (20) located inside each process, wherein the upstream process and the downstream process, based on the data restoring component, are configured to assist the new version process to restore data and data states;
wherein the data restoring component (20) particularly comprises: a link establishment component (21), configured to re-establish a link between the upstream process and the new version process, and re-establish a link between the downstream process and the new version process; and a data transmission component (22), configured to forward data, which was previously output to the old version process, outputted by the upstream process to the new version process, or, forward data, which was previously output to the downstream process by the old version process, outputted by the downstream process to the new version process so as to restore the data and the data state of the new version process.

5. The system according to claim 4, wherein when any software on the control plane and management plane in the communication device has a process running in a primary state and a process running in a standby state at the same time, the version management component (10) is configured to:
simultaneously trigger an old version process to be upgraded in a primary state and an old version process to be upgraded in a standby state to end.

6. The system according to any of claims 4 or 5, wherein the version management component (10) is further configured to, after upgrading a related process of the software on the control plane and management plane, trigger an update of data and data states of a related process of the software on the forwarding plane.

## Patentansprüche

1. Ein Verfahren zum Wiederherstellen von Daten und Datenzuständen von einem Prozess neuer Version, wobei das Verfahren an einem Kommunikationsgerät durchgeführt wird, in welchem Software auf einer Weiterleitungsebene getrennt von Software auf einer Steuerebene und Verwaltungsebene vorliegt und unter der Bedingung, dass eine Aktualisierung der Software auf Steuerebene und Verwaltungsebene durch eine Änderung in einem einzigen Prozess hervorgerufen wird, das Verfahren umfasst:
Schritt 1, einen Versionsverwaltungsprozess, der mindestens einen zu beendenden Prozess alter Version auslöst, und Daten und Datenzustände von einem vorgelagerten Prozess und einem nachgelagerten Prozess mindestens einer alten Version unverändert beibehalten werden (S101);
Schritt 2, nach erfolgreichem Beenden des mindestens einen Prozesses alter Version, die zu aktualisieren ist, startet der Versionsverwaltungsprozess den Prozess neuer Version (S102); und
Schritt 3, der Upstream-Prozess und der Downstream-Prozess unterstützen den Prozess neuer Version zur Wiederherstellung von Daten und Datenzuständen (S103);
wobei Schritt 3 insbesondere umfasst: den Prozess neuer Version entsprechend der Herstellung einer Verbindung mit dem vorgelagerten und dem nachgelagerten Prozess; die Ausgabe von Daten, die zuvor zum Prozess alter Version ausgegeben wurden, an den Prozess neuer Version über den nachgeschaltenen Prozess, oder dem vorgelagerten Prozess zur Ausgabe von Daten, die zuvor an den nachgelagerten Prozess von dem Prozess alter Version ausgegeben wurden, an den Prozess neuer Version, um die Daten und den Datenzustand vom Prozess neuer Version wiederherzustellen.

2. Das Verfahren nach Anspruch 2, wobei wenn jede Software auf Steuerebene und Verwaltungsebene im Kommunikationsgerät einen Prozess in einem primären Zustand und zugleich einen Prozess in einen Standby-Zustand laufen hat, der Versionsverwaltungprozess den mindestens einen zu beendenden Prozess alter Version auslöst, umfassend:
den Versionsverwaltungsprozess, der gleichzeitig einen Prozess alter Version, die zu aktualisieren ist, in einem primären Zustand auslöst sowie einen zu beendenen Prozess alter Version, die in einem Standby-Zustand zu aktualisieren ist.

3. Das Verfahren nach einem der Ansprüche 1 oder 2, wobei das Verfahren weiter umfasst:
Schritt 4, der Versionsverwaltungsprozess löst eine Aktualisierung der Daten und vom Datenzustand eines verbundenen Prozesses der Software auf Weiterleitungsebene aus (S104).

4. Ein System zum Wiederherstellen von Daten und Datenzuständen von einem Kommunikationsgerät, in welchem Software auf einer Weiterleitungsebene getrennt von Software auf einer Steuerebene und Verwaltungsebene ist und unter der Bedingung, dass ein Aktualisierungsvorgang der Software auf Steuerebene und Verwaltungsebene durch eine Änderung in einem einzigen Prozess hervorgerufen wird, das Verfahren umfassend:
eine Versionsverwaltungskomponente (10), so konfiguriert, dass mindestens ein zu beendender Prozess alter Version aktualisiert wird, und die Daten und Datenzustände von einem vorgelagerten Prozess und einen nachgeschalteten Prozess des mindestens einen Prozesses alter Version unverändert bleiben; und nach erfolgreichem Beenden des mindestens einen Prozesses alter Version, die aktualisiert werden soll, startet ein Prozess neuer Version; und
eine Daten-Wiederherstellungskomponente (20), die sich in jedem Prozess befindet, wobei vorgelagerter und nachgelagerter Prozess, basierend auf der Daten wiederherstellenden Komponente konfiguriert sind, um den Prozess neuer Version zu unterstützen, um Daten und Datenzustände wiederherzustellen;
wobei die Daten wiederherstellende Komponente (20) insbesondere umfasst: eine Komponente zum Verbindungsaufbau (21), so konfiguriert, um eine Verbindung zwischen vorgelagertem Prozess und dem Prozess neuer Version wieder herzustellen; und eine Datenübertragungskomponente (22), so konfiguriert, um Daten weiterzuleiten, die zuvor an den Prozess alter Version ausgegeben wurden, ausgegeben durch den vorgelagerten Prozess zum Prozess neuer Version, oder zum Weiterleiten von Daten, die zuvor durch den Prozess alter Version an den nachgelagerten Prozess ausgegeben wurden, ausgegeben durch den nachgelagerten Prozess zum Prozess neuer Version, um die Daten und den Datenzustand vom Prozess neuer Version wiederherzustellen.

5. Das System nach Anspruch 4, wobei wenn jede Software auf Steuerebene und Verwaltungsebene im Kommunikationsgerät einen Prozess in einem primären Zustand und zugleich einen Prozess in einen Standby-Zustand laufen hat, die Versionsverwaltungskomponente (10) konfiguriert ist, um:
gleichzeitig einen Prozess alter Version, die zu aktualisieren ist, in einem primären Zustand auszulösen sowie einen zu beendenen Prozess alter Version, die in einem Standby-Zustand zu aktualisieren ist.

6. Das System nach einem der Ansprüche 4 oder 5, wobei die Versionsverwaltungskomponente (10) des Weiteren konfiguriert ist, um nach der Aktualisierung des damit verbundenen Prozesses der Software auf Steuerebene und Verwaltungsebene eine Aktualisierung der Daten und Datenzustände von einem verbundenen Prozess der Software auf Weiterleitungsebene auszulösen.

## Revendications

1. Procédé de restauration des données et des états de données d'un traitement de nouvelle version, où ledit procédé est réalisé par un dispositif de communication dans lequel un logiciel situé sur un plan d'acheminement est distinct d'un logiciel situé sur un plan de commande et un plan de gestion, et ce dans des conditions telles que le processus de mise à niveau du logiciel sur le plan de commande et le plan de gestion résulte d'une modification ayant lieu au cours d'un seul et même traitement, le procédé comportant :
une étape 1, où un processus de gestion de version déclenche la fin d'au moins un traitement de mise à niveau de l'ancienne version et maintient inchangés les données et les états de données du processus en amont et du processus en aval d'au moins un traitement de l'ancienne version (S101) ;
une étape 2, où lorsque la fin d'au moins un traitement de mise à niveau de l'ancienne version a été réussie, le processus de gestion de version déclenche le début du traitement de la nouvelle version (S 102) ; et
une étape 3, au cours de laquelle le processus en amont et le processus en aval aident le traitement de la nouvelle version à restaurer les données et les états de données (S103);
dans lequel l'étape 3 comprend notamment le fait que le traitement de la nouvelle version établit respectivement une liaison avec le processus en amont et le processus en aval ; qu'il émet des données - auparavant émises en direction du traitement de l'ancienne version - vers le traitement de la nouvelle version via le processus en amont, ou que le processus en aval émet des données - auparavant émises par le traitement de l'ancienne version en direction du processus en aval lui-même - vers le traitement de nouvelle version, de manière à restaurer les données et les états de données du traitement de la nouvelle version.

2. Procédé selon la revendication 1, dans lequel lorsque tout logiciel situé sur le plan de commande et le plan de gestion, au sein du dispositif de communication, comporte un traitement s'effectuant dans le cadre d'un état primaire et un traitement s'effectuant en même temps en état d'attente, le processus de gestion de version déclenche la fin d'au moins un traitement de mise à niveau de l'ancienne version, ceci incluant le fait que :
le processus de gestion de version déclenche simultanément le traitement de mise à niveau de l'ancienne version dans le cadre de l'état primaire et la fin d'un traitement de mise à niveau de l'ancienne version en état d'attente.

3. Procédé selon l'une quelconque des revendications 1-2, dans lequel ledit procédé comporte par ailleurs :
une étape 4, où le processus de gestion de version déclenche une mise à jour des données et de l'état des données du processus afférent du logiciel sur le plan d'acheminement (S 104).

4. Système de restauration des données et des états de données d'un traitement de nouvelle version, où ledit système est doté d'un dispositif de communication dans lequel un logiciel situé sur un plan d'acheminement est distinct d'un logiciel situé sur un plan de commande et un plan de gestion, et ce dans des conditions telles que le processus de mise à niveau du logiciel sur le plan de commande et le plan de gestion résulte d'une modification ayant lieu au cours d'un seul et même traitement, le système comportant :
un composant de gestion de version (10) configuré pour déclencher la fin d'au moins un traitement de mise à niveau de l'ancienne version et maintenir inchangés les données et les états de données du processus en amont et du processus en aval d'au moins un traitement de l'ancienne version ; ainsi que pour déclencher - lorsque la fin d'au moins un traitement de mise à niveau de l'ancienne version a été réussie - le début du traitement de la nouvelle version ; et
un composant de restauration de données (20) situé au sein de chaque traitement, où le processus en amont et le processus en aval, s'appuyant sur le composant de restauration de donnés, sont configurés pour aider le traitement de la nouvelle version à restaurer les données et les états de données ;
dans lequel le composant de restauration de données (20) comprend notamment : un composant d'établissement de liaison (21), configuré pour rétablir une liaison entre le processus en amont et le traitement de nouvelle version, de même que pour rétablir un lien entre le processus en aval et le traitement de nouvelle version ; ainsi qu'un composant de transmission de données (22), configuré pour acheminer des données - auparavant émises en direction du traitement de l'ancienne version - émises à présent par le processus en amont vers le traitement de nouvelle version, ou pour acheminer des données - auparavant émises vers le processus en aval par le traitement de l'ancienne version - émises à présent par le processus en aval en direction du traitement de nouvelle version, de manière à restaurer les données et les états de données du traitement de la nouvelle version.

5. Système selon la revendication 4, où lorsque tout logiciel situé sur le plan de commande et le plan de gestion, au sein du dispositif de communication, comporte un traitement s'effectuant dans le cadre d'un état primaire et un traitement s'effectuant simultanément en état d'attente, le composant de gestion de la version (10) est configuré pour :
déclencher simultanément le traitement de mise à niveau de l'ancienne version dans le cadre de l'état primaire et la fin d'un traitement de mise à niveau de l'ancienne version en état d'attente.

6. Système selon l'une quelconque des revendications 4-5, où le composant de gestion de la version (10) est configuré en outre pour déclencher, après avoir mis à jour un traitement correspondant du logiciel sur le plan de commande et le plan de gestion, une mise à jour des données et de l'état des données du processus afférent du logiciel sur le plan d'acheminement.
